# EUROPÄISCHE PATENTSCHRIFT

(11) **EP 3 401 190 B1**
(45) Veröffentlichungstag und Bekanntmachung des Hinweises auf die Patenterteilung: **14.09.2022**
(21) Anmeldenummer: 18168876.3
(22) Anmeldetag: 24.04.2018
(51) Int. Cl.: B62D 15/02

(54) **VERFAHREN ZUM BETREIBEN EINES FAHRERASSISTENZSYSTEMS EINES KRAFTFAHRZEUGS ZUM MANÖVRIEREN DES KRAFTFAHRZEUGS IN EINEM FAHRBAREN BEREICH, FAHRERASSISTENZSYSTEM SOWIE KRAFTFAHRZEUG**
METHOD FOR OPERATING A DRIVER ASSISTANCE SYSTEM OF A MOTOR VEHICLE IN ORDER TO MANOEUVRE THE MOTOR VEHICLE IN A DRIVABLE AREA, DRIVER ASSISTANCE SYSTEM AND MOTOR VEHICLE
PROCÉDÉ DE FONCTIONNEMENT D'UN SYSTÈME D'AIDE À LA CONDUITE D'UN VÉHICULE AUTOMOBILE POUR MANOEUVRER LE VÉHICULE AUTOMOBILE DANS UNE ZONE DE CONDUITE, SYSTÈME D'ASSISTANCE À LA CONDUITE AINSI QUE VÉHICULE AUTOMOBILE

(30) Priorität: 10.05.2017 DE 102017110020
(43) Veröffentlichungstag der Anmeldung: 14.11.2018
(73) Patentinhaber: Valeo Schalter und Sensoren GmbH, 74321 Bietigheim-Bissingen (DE)
(72) Erfinder: Tzempetzis, Dimitrios, 74321 Bietigheim-Bissingen (DE); Heimberger, Markus, 74321 Bietigheim-Bissingen (DE)
(74) Vertreter: Pothmann, Karsten

(56) Entgegenhaltungen:
- DE-A1-102013 015 348
- DE-A1-102013 015 349
- DE-A1-102014 216 577
- DE-A1-102015 002 405
- DE-A1-102015 205 142

## Beschreibung

Die vorliegende Erfindung betrifft ein Verfahren zum Betreiben eines Fahrerassistenzsystems für ein Kraftfahrzeug, bei welchem in einem Lernmodus des Fahrerassistenzsystems, während dem das Kraftfahrzeug von einer Startposition zu einer Zielposition entlang zumindest einer Lerntrajektorie von einem Fahrer des Kraftfahrzeugs manuell manövriert wird, die zumindest eine Lerntrajektorie aufgezeichnet wird und Objekte in einer Umgebung des Kraftfahrzeugs erfasst werden, und in einem Betriebsmodus des Fahrerassistenzsystems das Kraftfahrzeug anhand der zumindest einen aufgezeichneten Lerntrajektorie und der erfassten Objekte zumindest semi-autonom zwischen der Startposition und der Zielposition manövriert wird. Darüber hinaus betrifft die vorliegende Erfindung ein Fahrerassistenzsystem für ein Kraftfahrzeug. Schließlich betrifft die vorliegende Erfindung ein Kraftfahrzeug mit einem solchen Fahrerassistenzsystem.

Aus dem Stand der Technik sind Fahrerassistenzsysteme bekannt, mit denen das Kraftfahrzeug entlang einer zuvor gespeicherten Trajektorie manövriert werden kann, wobei die Trajektorie von einer Startposition zu einer Zielposition verläuft. Zum Speichern der Trajektorie kann das Fahrerassistenzsystem zunächst in einem Lernmodus betrieben werden. In dem Lernmodus wird das Kraftfahrzeug manuell von einem Fahrer des Kraftfahrzeugs manövriert. Die Trajektorie, die das Kraftfahrzeug während des manuellen Manövrierens zurücklegt, wird von dem Fahrerassistenzsystem aufgezeichnet. Dabei kann es ferner vorgesehen sein, dass während des manuellen Manövrierens Objekte in der Umgebung des Kraftfahrzeugs erkannt werden und als Landmarken gespeichert werden.

In einem späteren Betriebsmodus des Fahrerassistenzsystems kann dann das Kraftfahrzeug semi-autonom oder autonom entlang der gespeicherten Trajektorie manövriert werden. Bei den aus dem Stand der Technik bekannten Fahrerassistenzsystemen wird das Kraftfahrzeug zwischen der Startposition und der Zielposition manövriert. Beispielsweise kann das Kraftfahrzeug entlang der gespeicherten Trajektorie manövriert werden, falls erkannt wird, dass das Kraftfahrzeug die Startposition der Trajektorie erreicht hat. Bei dem zumindest semi-autonomen Manövrieren des Kraftfahrzeugs können die zuvor gespeicherten Landmarken herangezogen werden. Auf diese Weise kann der Fahrer des Kraftfahrzeugs beispielsweise bei Parkmanövern in einer Heimatzone unterstützt werden. Hierbei kann der Fahrer beispielsweise bei dem täglichen Einparken des Kraftfahrzeugs in eine Garage seines Hauses oder in einen Parkplatz an seiner Arbeitsstätte unterstützt werden.

Hierzu beschreibt die DE 10 2014 016 237 A1 ein Verfahren zum Betrieb eines Fahrzeugs, insbesondere zum Anfahren einer Parkposition durch das Fahrzeug, bei welchem Umgebungsdaten der Umgebung des Fahrzeugs erfasst werden. Dabei werden die Umgebungsdaten durch eine Aktivierung eines Fahrzeugführers oder nach einer Identifizierung einer vorbestimmten Zone erfasst und gespeichert. Aus den Umgebungsdaten wird eine dreidimensionale Umgebungskarte mit realen Bilddaten der Umgebung und/oder mit aus den Umgebungsdaten erzeugten virtuellen Bilddaten erzeugt oder aktualisiert. Zudem wird die dreidimensionale Umgebungskarte auf einer Anzeigevorrichtung dargestellt und zumindest eine mögliche fahrbare Trajektorie zur Anfahrt zumindest einer Parkposition wird in der dreidimensionalen Umgebungskarte dargestellt.

Darüber hinaus beschreibt die DE 10 2013 015 348 A1 ein Verfahren zum Betrieb eines Fahrzeugs, insbesondere zum Anfahren eines Parkplatzes in einer nicht einsehbaren/straßenfernen Parkzone durch das Fahrzeug, bei welchem Umgebungsdaten des Fahrzeugs erfasst werden. Dabei ist es vorgesehen, dass beim Anfahren eines Parkplatzes in der Parkzone identifiziert wird, ob dieser ein Heim-Parkplatz oder die Parkzone eine Heim-Parkzone ist, wobei bei identifiziertem Heim-Parkplatz oder Heim-Parkzone und Annäherung des Fahrzeugs an den identifizierten Heim-Parkplatz bzw. an die identifizierte Heim-Parkzone erfasste Umgebungsdaten oder Fahrdaten gespeichert oder aktualisiert werden. In einem Lernmodus werden anhand der Umgebungsdaten oder Fahrdaten mehrere Trajektorien für den mindestens einen Heim-Parkplatz der mindestens einen Heim-Parkzone ermittelt und gespeichert. In einem Betriebsmodus beim Anfahren des mindestens einen Heim-Parkplatzes der mindestens einen Heim-Parkzone werden mögliche fahrbare Trajektorien zur Auswahl und Aktivierung ausgegeben oder wenn nur eine der ermittelten Trajektorien fahrbar ist, wird diese automatisch aktiviert.

Die DE102015205142A1 zeigt ein Verfahren zum Betreiben eines Fahrerassistenzsystems gemäß Oberbegriff des Patentanspruchs 1. Die DE102014216577A1, DE102015002405A1 und DE102013015349A1 zeigen weitere Verfahren zum Betreiben eines Fahrerassistenzsystems.

Es ist Aufgabe der vorliegenden Erfindung, eine Lösung aufzuzeigen, wie die Nutzung von Fahrerassistenzsystemen, mit welchen in einem Lernmodus Objekte erfasst werden, auf einfache und zuverlässige Weise erweitert werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform eines Verfahrens zum Betreiben eines Fahrerassistenzsystems für ein Kraftfahrzeug, werden bevorzugt in einem Lernmodus des Fahrerassistenzsystems, während dem das Kraftfahrzeug insbesondere von einer Startposition zu einer Zielposition entlang zumindest einer Lerntrajektorie von einem Fahrer des Kraftfahrzeugs in Vorwärtsrichtung manuell manövriert wird, die zumindest eine Lerntrajektorie aufgezeichnet wird und bevorzugt Objekte in einer Umgebung des Kraftfahrzeugs erfasst. Darüber hinaus ist es insbesondere vorgesehen, dass in einem Betriebsmodus des Fahrerassistenzsystems das Kraftfahrzeug anhand der zumindest einen aufgezeichneten Lerntrajektorie und der erfassten Objekte zumindest semi-autonom zwischen der Startposition und der Zielposition manövriert wird. Dabei ist es ferner vorgesehen, dass in dem Lernmodus bevorzugt anhand der zumindest einen aufgezeichneten Lerntrajektorie und der erfassten Objekte ein fahrbarer Bereich für das Kraftfahrzeug bestimmt wird. Zudem wird in dem fahrbaren Bereich zumindest eine Trajektorie zwischen der Startposition und der Zielposition bestimmt. In dem Betriebsmodus wird das Kraftfahrzeug insbesondere entlang der zumindest einen bestimmten Trajektorie manövriert, wobei auf Grundlage der zumindest einen Lerntrajektorie und des hieraus ermittelten fahrbaren Bereichs mehrere Trajektorien bestimmt werden und dem Fahrer zur Auswahl angeboten werden, wobei vom Fahrer eine Trajektorie auswählbar ist, bei welcher ein Richtungswechsel durchgeführt wird, sodass er das Kraftfahrzeug in Vorwärtsfahrtrichtung auf eine Fahrbahn manövriert.

Ein erfindungsgemäßes Verfahren dient zum Betreiben eines Fahrerassistenzsystems für ein Kraftfahrzeug. Hierbei werden in einem Lernmodus des Fahrerassistenzsystems, während dem das Kraftfahrzeug von einer Startposition zu einer Zielposition entlang zumindest einer Lerntrajektorie von einem Fahrer des Kraftfahrzeugs manuell manövriert wird, die zumindest eine Lerntrajektorie aufgezeichnet und Objekte in einer Umgebung des Kraftfahrzeugs erfasst. In einem Betriebsmodus des Fahrerassistenzsystems wird das Kraftfahrzeug anhand der zumindest einen aufgezeichneten Lerntrajektorie und der erfassten Objekte zumindest semi-autonom zwischen der Startposition und der Zielposition manövriert. Zudem wird in dem Lernmodus anhand der zumindest einen aufgezeichneten Lerntrajektorie und der erfassten Objekte ein fahrbarer Bereich für das Kraftfahrzeug bestimmt. Des Weiteren wird innerhalb des fahrbaren Bereichs zumindest eine Trajektorie zwischen der Startposition und der Zielposition bestimmt. In dem Betriebsmodus wird das Kraftfahrzeug ferner entlang der zumindest einen bestimmten Trajektorie manövriert.

Mithilfe des Verfahrens soll das Fahrerassistenzsystem des Kraftfahrzeugs zunächst in dem Lernmodus trainiert werden. In einem anschließenden Betriebsmodus kann das Kraftfahrzeug dann auf Grundlage des Trainings mithilfe des Fahrerassistenzsystems manövriert werden. Beispielsweise kann das Verfahren dazu verwendet werden, das Kraftfahrzeug in eine Garage oder einen Stellplatz des Fahrers einzuparken. Das Verfahren kann auch dazu verwendet werden, das Kraftfahrzeug an einem Stellplatz an der Arbeitsstätte des Fahrers einzuparken. Dabei ist es vorgesehen, dass der Fahrer in dem Lernmodus die Startposition und die Zielposition vorgibt, zwischen denen dann das Kraftfahrzeug zu einem späteren Zeitpunkt in dem Betriebsmodus zumindest semi-autonom manövriert werden soll. In dem Lernmodus wird das Kraftfahrzeug ausschließlich von dem Fahrer manuell bedient. In dem Lernmodus wird zumindest eine Lerntrajektorie, die der Fahrer durch das manuelle Manövrieren vorgibt, mithilfe des Fahrerassistenzsystems aufgezeichnet. Hierzu kann beispielsweise fortlaufend der eingestellte Lenkwinkel und/oder die Umdrehungen zumindest eines Rades des Kraftfahrzeugs aufgezeichnet werden. Es kann auch vorgesehen sein, dass die Startposition, die Zielposition und/oder die Lerntrajektorie mithilfe eines satellitengestützten Positionsbestimmungssystems bestimmt werden. Ferner kann es vorgesehen sein, dass der Fahrer in mehreren Lernmodi jeweils eine Lerntrajektorie vorgibt. In dem nachfolgenden Betriebsmodus kann dann das Kraftfahrzeug zwischen der Startposition und der Zielposition manövriert werden. Hier kann das Kraftfahrzeug semi-autonom mittels des Fahrerassistenzsystems manövriert werden. Dabei greift das Fahrerassistenzsystem in die Lenkung ein und der Fahrer des Kraftfahrzeugs betätigt weiterhin das Gaspedal und das Bremspedal. Bevorzugt wird das Kraftfahrzeug vollautonom entlang der Trajektorie manövriert. In diesem Fall übernimmt das Fahrerassistenzsystem auch den Eingriff in einen Antriebsmotor und ein Bremssystem des Kraftfahrzeugs.

Darüber hinaus wird in dem Lernmodus zumindest ein Objekt in der Umgebung des Kraftfahrzeugs erkannt. Während des manuellen Manövrierens kann mit Sensoren bzw. eines Umfeldsensors des Fahrerassistenzsystems der Umgebungsbereich des Kraftfahrzeugs erfasst werden. Bei den Sensoren kann es sich beispielsweise um Ultraschallsensoren, Kameras, Radarsensoren und/oder Laserscanner handeln. Diese Sensoren sind insbesondere derart ausgestaltet, dass diese Objekte einem Umgebungsbereich vor dem Kraftfahrzeug, einem Umgebungsbereich hinter dem Kraftfahrzeug und einem jeweiligen Umgebungsbereich seitlich neben dem Kraftfahrzeug erfassen können. Die Objekte, deren Position und/oder deren Abmessungen werden zudem gespeichert. Somit können die gespeicherten Objekte in dem nachfolgenden Betriebsmodus des Fahrerassistenzsystems als Landmarken zur Orientierung verwendet werden.

Gemäß einem wesentlichen Aspekt der vorliegenden Erfindung ist es nun vorgesehen, dass anhand der zumindest einen aufgezeichneten Lerntrajektorie und der erfassten Objekte ein fahrbarer bzw. überfahrbarer Bereich für das Kraftfahrzeug bestimmt wird. Dieser fahrbare Bereich beschreibt einen Bereich, in welchem das Kraftfahrzeug während des Betriebsmodus bewegt werden darf. Insbesondere beschreibt der fahrbare Bereich einem Bereich, in welchem das Kraftfahrzeug manövriert werden kann, ohne dass eine Kollision mit einem der Objekte erfolgt. Der fahrbare Bereich kann anhand der zumindest einen Lerntrajektorie bestimmt werden, welche von dem Fahrer in dem Lernmodus vorgegeben wird. Insbesondere wird der fahrbare Bereich anhand von mehreren Lerntrajektorien bestimmt. Darüber hinaus kann der fahrbare Bereich auf Grundlage der erfassten Objekte bestimmt werden. Zudem kann der fahrbare Bereich auf Grundlage der räumlichen Abmessungen des Kraftfahrzeugs und/oder anhand eines bekannten Wendekreises des Kraftfahrzeugs bestimmt werden. In diesem fahrbaren Bereich kann nun mithilfe des Fahrerassistenzsystems zumindest eine Trajektorie bestimmt werden, welche von der Startposition zu der Zielposition und/oder von der Zielposition zu der Startposition führt. Es kann auch vorgesehen sein, dass mehrere Trajektorien in dem fahrbaren Bereich bestimmt werden. In dem nachfolgenden Betriebsmodus kann dann das Kraftfahrzeug entlang einer der bestimmten Trajektorie zumindest semi-autonom manövriert werden. Mit anderen Worten kann das Kraftfahrzeug mithilfe des Fahrerassistenzsystems quasi eigenständig in dem fahrbaren Bereich bewegt werden. Innerhalb des fahrbaren Bereichs kann nun die optimale Trajektorie ermittelt werden, entlang welcher das Kraftfahrzeug in dem Betriebsmodus manövriert werden kann. Auf diese Weise kann die Nutzung des Fahrerassistenzsystems auf einfache und zuverlässige Weise erweitert werden.

Bevorzugt wird in zeitlich aufeinanderfolgenden Lernmodi des Fahrerassistenzsystems eine Mehrzahl von Lerntrajektorie aufgezeichnet und der fahrbare Bereich wird anhand der Mehrzahl von Lerntrajektorie, Positionen der erfassten Objekte und/oder Abmessungen der erfassten Objekte bestimmt. Wenn das Kraftfahrzeug von dem Fahrer in zeitlich aufeinanderfolgenden Lernmodi zwischen der Startposition und der Zielposition manövriert wird, kann bei jedem Lernmodus die Lerntrajektorie aufgezeichnet werden. Auf Grundlage der Mehrzahl von aufgezeichneten Lerntrajektorie kann dann der fahrbare Bereich für das Kraftfahrzeug bestimmt werden. Es kann also ein fahrbares Feld aufgebaut werden, in welchem das Kraftfahrzeug in dem Betriebsmodus manövriert werden kann. Dabei unterscheiden sich erfahrungsgemäß die jeweiligen Lerntrajektorien, die in den zeitlich aufeinanderfolgenden Lernmodi aufgezeichnet werden. Falls nur eine Lerntrajektorie aufgezeichnet wird, kann der fahrbare Bereich dem Fahrschlauch entsprechen, welchen das Kraftfahrzeug während des Lernmodus einnimmt. Wenn eine Mehrzahl von Lerntrajektorien aufgezeichnet wird, erweitert sich der fahrbare Bereich, welcher auf Grundlage der aufgezeichneten Lerntrajektorien bestimmt wird. Darüber hinaus kann es auch vorgesehen sein, dass die Trajektorien, entlang welcher das Kraftfahrzeug in dem Betriebsmodus manövriert wird, aufgezeichnet werden. Auch die aufgezeichneten Trajektorien können zur Bestimmung des fahrbaren Bereichs herangezogen werden. Zudem können die Positionen der jeweiligen erfassten Objekte und/oder die räumlichen Abmessungen der jeweiligen erfassten Objekte bei der Bestimmung des fahrbaren Bereichs berücksichtig werden. Dies ermöglicht insgesamt eine zuverlässige Bestimmung des fahrbaren Bereichs.

Erfindungsgemäß führt die zumindest eine bestimmte Trajektorie von der Startposition zu der Zielposition in Vorwärtsfahrtrichtung. Eine der Trajektorien, die innerhalb des fahrbaren Bereichs bestimmt wird, kann also von der Startposition zu der Zielposition in Vorwärtsfahrtrichtung führen. Beispielsweise kann das Kraftfahrzeug in bekannter Weise in Vorwärtsfahrtrichtung von der Startposition zu der Zielposition manövriert werden. Zudem wird es ermöglicht, dass das Kraftfahrzeug in Rückwärtsfahrtrichtung von der Startposition zu der Zielposition manövriert wird. Dabei kann es auch vorgesehen sein, dass zwischen der Startposition und der Zielposition verschiedene Trajektorien innerhalb des fahrbaren Bereichs bestimmt werden. Somit kann der Fahrer des Kraftfahrzeugs in dem Betriebsmodus auf zuverlässige und komfortable Weise unterstützt werden.

Erfindungsgemäß führt die zumindest eine bestimmte Trajektorie von der Zielposition zu der Startposition in Vorwärtsfahrtrichtung. Eine der Trajektorien, die innerhalb des fahrbaren Bereichs bestimmt wird, kann also von der Zielposition zu der Startposition in Vorwärtsfahrtrichtung. Dadurch, dass die Trajektorie innerhalb des fahrbaren Bereichs bestimmt wird, kann das Kraftfahrzeug in dem Betriebsmodus des Fahrerassistenzsystems nicht nur von der Startposition zu der Zielposition, sondern auch von der Zielposition zu der Startposition manövriert werden. Wenn das Kraftfahrzeug beispielsweise in Vorwärtsfahrtrichtung von der Startposition zu der Zielposition manövriert wird, kann das Kraftfahrzeug in Rückwärtsfahrtrichtung wieder von der Zielposition zu der Startposition manövriert werden. Auf diese Weise kann der Fahrer auch bei der Fahrt von der Zielposition zu der Startposition unterstützt werden.

Erfindungsgemäß, bei der zumindest einen bestimmten Trajektorie ein Richtungswechsel zwischen der Rückwärtsfahrtrichtung und der Vorwärtsfahrtrichtung durchgeführt wird. Eine der Trajektorien, die innerhalb des fahrbaren Bereichs bestimmt wird, kann also einen Richtungswechsel beinhalten. Dies bedeutet, dass die bestimmte Trajektorie beispielsweise zwei Abschnitte bzw. Züge aufweist, zwischen denen die Fahrtrichtung gewechselt wird. Beispielweise kann die Lerntrajektorie entlang der Vorwärtsfahrtrichtung von der Startposition, welche beispielsweise einer an das Grundstück grenzenden Straße zugeordnet ist, zu der Zielposition, welche beispielsweise einer Garage auf dem Grundstück zugeordnet ist, vorgegeben werden. In diesem Fall kann die Trajektorie so bestimmt werden, dass das Kraftfahrzeug in dem Betriebsmodus ausgehend von der Startposition in einem ersten Zug in Vorwärtsfahrtrichtung manövriert wird und in einem anschließenden zweiten Zug in Rückwärtsfahrtrichtung in die Zielposition manövriert wird. Bei einer nachfolgenden Fahrt kann dann das Kraftfahrzeug ausgehend von der Zielposition in Vorwärtsfahrtrichtung von der Zielposition zu der Startposition manövriert werden. Somit wird dem Fahrer beispielsweise das Herausfahren aus der Garage erleichtert. Grundsätzlich kann die Trajektorie eine beliebige Anzahl von Abschnitten aufweisen, zwischen denen die Fahrtrichtung gewechselt wird. Es kann auch vorgesehen sein, dass ein Wendepunkt bestimmt wird, an welchem ein Richtungswechsel der Fahrtrichtung vorgenommen werden kann. Dieser Wendepunkt kann dem Fahrer angezeigt werden oder zur Auswahl angeboten werden.

Vorzugsweise wird die zumindest eine Trajektorie innerhalb des fahrbaren Bereichs nach einem vorbestimmten Optimierungskriterium bestimmt. Hierbei kann das Optimierungskriterium insbesondere beinhalten, dass die Trajektorie den schnellsten Weg, den kürzesten Weg oder den Weg mit der geringsten Anzahl an Richtungswechsel zwischen der Startposition und der Zielposition beschreibt. Grundsätzlich können unterschiedlichste Optimierungskriterien für die Bestimmung der Trajektorie herangezogen werden. Beispielweise beschreibt die Trajektorie den schnellsten Weg zwischen der Startposition und der Zielposition. Nachdem der fahrbare Bereich bestimmt wurde, kann der schnellste Weg bzw. die schnellste Route von der Startposition zu Zielposition oder von der Zielposition zu der Startposition bestimmt werden. Somit wird es beispielsweise ermöglicht, dass das Kraftfahrzeug innerhalb einer kurzen Zeit von der Startposition, welche beispielsweise einer Straße zugeordnet ist, zu der Zielposition, welche beispielsweise einem Stellplatz oder einer Garage zugeordnet ist, manövriert wird. Dies gilt in gleicher Weise für die Fahrt von der Garage zu der Straße. Gemäß einer weiteren Ausgestaltung beschreibt zumindest eine der Trajektorien den kürzesten Weg zwischen der Startposition und der Zielposition. Wenn der fahrbare Bereich bestimmt wurde, kann auch die kürzeste Route von der Startposition zu der Zielposition und in umgekehrter Richtung bestimmt werden. Die Trajektorie kann auch so bestimmt werden, dass diese den bequemsten Weg bzw. den Weg mit den wenigsten Zügen, den geringsten Lenkwinkeländerungen oder dergleichen beschreibt. Diese Optimierungskriterien können von dem Fahrer vorgegeben werden. Somit kann der Fahrer bedarfsgerecht unterstützt werden.

Weiterhin ist es vorteilhaft, wenn die zumindest eine Trajektorie eine von dem Fahrer im Lernmodus vorgegebene Bewegungsbahn bzw. Trajektorie des Kraftfahrzeugs zwischen der Startposition und der Zielposition beschreibt. Mit anderen Worten kann die Lerntrajektorie, welche von dem Fahrer manuell in dem Lernmodus vorgegeben wurde, in dem Betriebsmodus nachgefahren werden. Grundsätzlich kann es vorgesehen sein, dass eine Mehrzahl von Lerntrajektorien, die von dem Fahrer in dem Lernmodus manuell vorgegeben wird, aufgezeichnet werden. Insbesondere können die von dem Fahrer vorgegeben Trajektorien als sogenannte Favoriten-Trajektorien dem Fahrer zur Auswahl angeboten werden.

Bevorzugt wird eine digitale Umgebungskarte bestimmt, welche den fahrbaren Bereich und die Objekte beschreibt. Die Objekte, deren Position und/oder deren Abmessungen können in eine digitale Umgebungskarte eingetragen werden, welche die Umgebung des Kraftfahrzeugs beschreibt. Dabei kann es ferner vorgesehen sein, dass zum Bereitstellen der digitalen Umgebungskarte eine digitale Landkarte herangezogen wird, welche beispielsweise frei verfügbar ist oder von einem Kartendienst bezogen werden kann. Wenn der fahrbare Bereich bzw. die digitale Umgebungskarte innerhalb eines öffentlichen Parkplatzes bestimmt wird, kann beispielsweise eine digitale Karte des Parkplatzes von einem Betreiber des Parkplatzes empfangen werden. Diese digitale Karte kann Informationen zu Hindernissen des Parkplatzes umfassen. Dieser ermöglicht eine zuverlässige Bestimmung der digitalen Umgebungskarte und somit des fahrbaren Bereichs.

Dabei ist es insbesondere vorgesehen, dass die digitale Umgebungskarte in aufeinanderfolgenden Lermodi und/oder Betriebsmodi aktualisiert wird, wobei in den aufeinanderfolgenden Lermodi und/oder Betriebsmodi zeitweise vorhandene Objekte in dem fahrbaren erkannt werden. Mit anderen Worten wird die digitale Umgebungskarte fortlaufend aktualisiert, wenn das Kraftfahrzeug von der Startposition zu der Zielposition und/oder von der Zielposition zu der Startposition manövriert wird. Dabei ist es insbesondere vorgesehen, dass zeitweise vorhandene Objekte erkannt werden. Solche zeitweise vorhandenen Objekte können beispielsweise zeitweise geparkte Fahrzeuge, wie Personenkraftwagen, Motorräder, Fahrräder oder dergleichen, sein. Bei den zeitweise vorhandenen Objekten kann es sich auch um Objekte, welche zeitweise dem fahrbaren Bereich abgestellt wurden. Somit kann der fahrbare Bereich auf Grundlage der fortlaufend aktualisierten Umgebungskarte bestimmt werden.

Weiterhin ist es vorteilhaft, wenn eine Mehrzahl von Trajektorien innerhalb des fahrbaren Bereichs bestimmt wird und dem Fahrer mittels einer Benutzerschnittstelle zur Auswahl angeboten wird. Die Benutzerschnittstelle bzw. Menschen-Maschinen-Schnittstelle kann eine Anzeigeeinrichtung aufweisen, auf welchem die Mehrzahl von Trajektorien gegebenenfalls zusammen mit dem fahrbaren Bereich angezeigt werden können. Zudem kann die Benutzerschnittstelle eine Erfassungseinrichtung zum Erfassen einer Bedieneingabe von dem Fahrer aufweisen. Somit kann der Fahrer beispielsweise eine der bestimmten Trajektorie auswählen. Im Anschluss daran kann das Kraftfahrzeug in dem Betriebsmodus des Fahrerassistenzsystems entlang der ausgewählten Trajektorie zumindest semi-autonom manövriert werden. Damit kann der Fahrer auf komfortable Weise unterstützt werden. Darüber aus kann es vorgesehen sein, dass ein Verlauf zumindest einer der Trajektorien infolge einer Bedieneingabe des Fahrers an der Benutzerschnittstelle verändert wird. Auf diese Weise wird es dem Fahrer ermöglicht, den Verlauf der Trajektorie, den Startpunkt und/oder den Zielpunkt zu verändern.

Ein erfindungsgemäßes Fahrerassistenzsystem für ein Kraftfahrzeug ist zum Durchführen eines erfindungsgemäßen Verfahrens und der vorteilhaften Ausgestaltung davon ausgelegt. Das Fahrerassistenzsystem kann beispielsweise Sensoren umfassen, mit denen Objekte in der Umgebung des Kraftfahrzeugs erfasst werden können. Darüber hinaus kann das Fahrerassistenzsystem einen Bewegungssensor aufweisen, mit welchem die Bewegung des Kraftfahrzeugs in dem Lernmodus aufgezeichnet werden kann. Darüber hinaus kann das Fahrerassistenzsystem ein elektronisches Steuergerät aufweisen, mittels welchem die Lerntrajektorie aufgezeichnet und die Objekte gespeichert werden können. Zudem kann mittels des Steuergeräts eine Lenkung, ein Antriebsmotor und/oder ein Bremssystem während des zumindest semi-autonomen Manövrierens angesteuert werden können. Zudem kann das Fahrerassistenzsystem ein satellitengestütztes Positionsbestimmungssystem aufweisen.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäße einer Ausführungsform der Erfindung, welches ein Fahrerassistenzsystem aufweist;
- Fig. 2: das Kraftfahrzeug, welches manuell entlang einer Lerntrajektorie manövriert wird, wobei das Fahrerassistenzsystem in einem Lernmodus betrieben wird;
- Fig. 3: das Kraftfahrzeug, welches in einem Betriebsmodus des Fahrerassistenzsystems entlang einer Trajektorie manövriert wird;
- Fig. 4: das Kraftfahrzeug, welches in dem Betriebsmodus des Fahrerassistenzsystems entlang einer weiteren Trajektorie manövriert wird;
- Fig. 5: das Kraftfahrzeug, welches in dem Betriebsmodus des Fahrerassistenzsystems entlang einer weiteren Trajektorie manövriert wird;
- Fig. 6: das Kraftfahrzeug, wobei sich das Fahrerassistenzsystem in dem Lernmodus befindet, gemäß einer weiteren Ausführungsform;
- Fig. 7: das Kraftfahrzeug, welches in dem Betriebsmodus des Fahrerassistenzsystems entlang einer Trajektorie manövriert wird;
- Fig. 8: das Kraftfahrzeug, wobei sich das Fahrerassistenzsystem in dem Lernmodus befindet, gemäß einer weiteren Ausführungsform; und
- Fig. 9: das Kraftfahrzeug, welches in dem Betriebsmodus des Fahrerassistenzsystems entlang einer Trajektorie manövriert wird;

In den Figuren werden gleiche und funktionsgleiche Elemente mit den gleichen Bezugszeichen versehen.

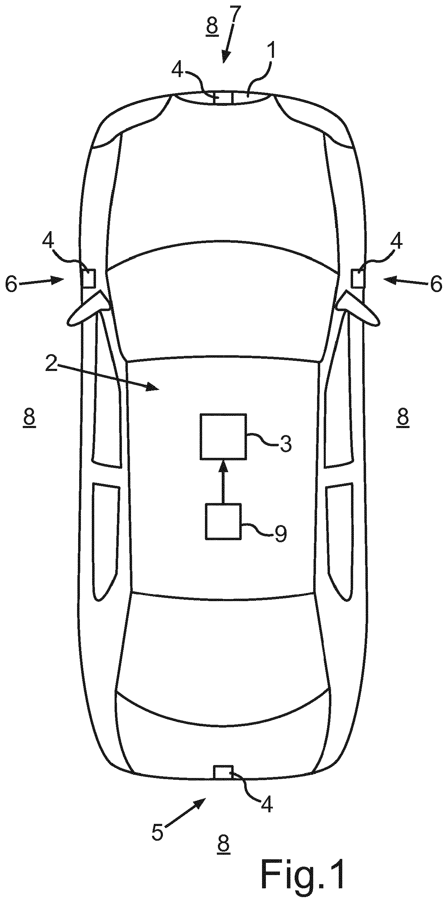

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum ein elektronisches Steuergerät 3. Darüber hinaus umfasst das Fahrerassistenzsystem 2 zumindest einen Sensor 4 bzw. einen Umfeldsensor. In dem vorliegenden Ausführungsbeispiel umfasst das Fahrerassistenzsystem 2 vier Sensoren 4, die verteilt an dem Kraftfahrzeug 1 angeordnet sind. Vorliegend ist einer der Sensoren 4 in einem Heckbereich 5 des Kraftfahrzeugs 1 angeordnet, einer der Sensoren 4 ist in einem Frontbereich 7 des Kraftfahrzeugs 1 angeordnet und die übrigen zwei Sensoren 4 sind in einem jeweiligen Seitenbereich 6, insbesondere in einem Bereich der Seitenspiegel, des Kraftfahrzeugs 1 angeordnet. Die jeweiligen Sensoren 4 sind insbesondere als Kameras ausgebildet.

Mit den Sensoren 4 können Objekte 10 in einer Umgebung 8 des Kraftfahrzeugs 1 erfasst werden. Hierzu können mit den Sensoren 4 bzw. mit den Kameras Bilder bzw. Bildsequenzen bereitgestellt werden, welche die Objekte 10 in der Umgebung 8 beschreiben. Diese Bilder können dann von den jeweiligen Kameras an das Steuergerät 3 übertragen werden. Mithilfe eines entsprechenden Objekterkennungsalgorithmus kann dann das Steuergerät 3 die Objekte 10 in der Umgebung 8 erkannt werden. Die Objekte 10, deren Position und/oder deren Abmessungen können eine digitale Umgebungskarte eingetragen werden, welche die Umgebung 8 beschreiben.

Darüber hinaus umfasst das Fahrerassistenzsystem 2 einen Bewegungssensor 9, mittels welchem eine Bewegung des Kraftfahrzeugs 1 aufgezeichnet werden kann. Mit dem Bewegungssensor 9 kann beispielsweise fortlaufend ein Lenkwinkel und/oder Umdrehungen zumindest eines Rades des Kraftfahrzeugs 1 bestimmt werden. Auch der Bewegungssensor 9 ist zur Datenübertragung dem Steuergerät 3 verbunden. Darüber hinaus kann der Bewegungssensor 9 einen Empfänger für ein satellitengestütztes Positionsbestimmungssystem. Mit diesem kann die Position des Kraftfahrzeugs 1 fortlaufend bestimmt werden.

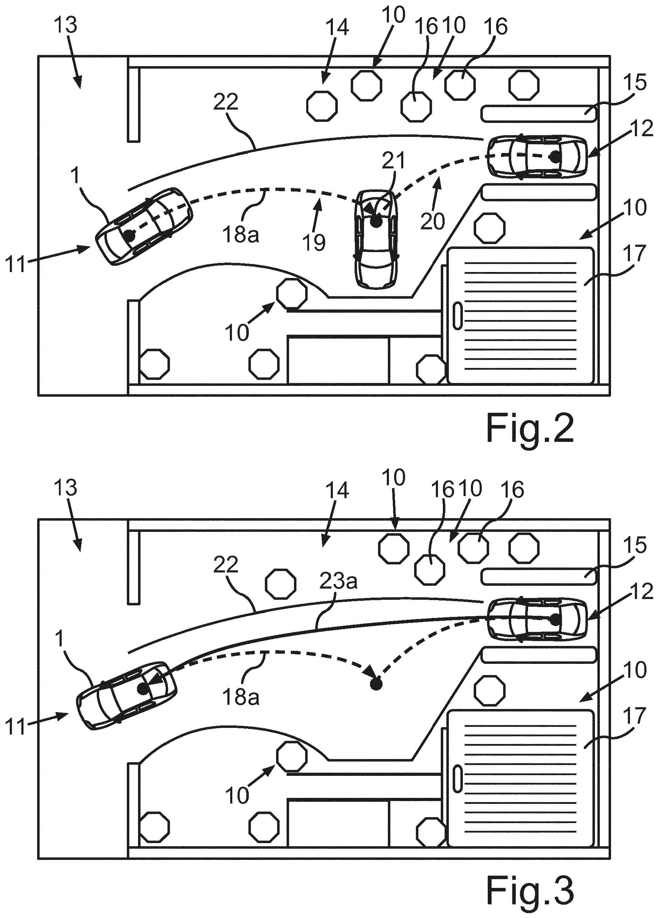

Fig. 2 zeigt das Kraftfahrzeug 1, wobei das Fahrerassistenzsystem 2 in einem Lernmodus betrieben wird. In dem Lernmodus wird das Kraftfahrzeug 1 von einem Fahrer des Kraftfahrzeugs 1 entlang einer Lerntrajektorie 18a manuell manövriert. Dabei wird das Kraftfahrzeug 1 von einer Startposition 11 zu einer Zielposition 12 manövriert. Die Startposition 11 befindet sich vorliegend auf einer Fahrbahn 13, welche an ein Grundstück 14 angrenzt. Das Grundstück 14 ist einer sogenannten Heimatszone zugeordnet. Die Zielposition 12 befindet sich innerhalb einer Garage 15 auf dem Grundstück 14. Auf dem Grundstück 14 befinden sich zudem mehrere Objekte 10, welche vorliegend durch Pflanzen 16, durch ein Haus 17 sowie durch die Garage 15 gebildet sind.

In dem Lernmodus wird das Kraftfahrzeug 1 von dem Fahrer entlang der Lerntrajektorie 18a manövriert. Dabei enthält die Lerntrajektorie 18a einen Richtungswechsel. Die Lerntrajektorie 18a weist vorliegend einen ersten Abschnitt 19 auf, entlang welcher das Kraftfahrzeug 1 in Vorwärtsfahrtrichtung bewegt wird. Zudem weist die Trajektorie 18a einen zweiten Abschnitt 20 auf, entlang welcher das Kraftfahrzeug 1 in Rückwärtsfahrtrichtung bewegt wird. Zwischen dem ersten Abschnitt 19 und dem zweiten Abschnitt 20 ist ein Wendepunkt 21 vorgesehen. In dem Lernmodus wird die von dem Fahrer vorgegebenen Lerntrajektorie 18 aufzeichnet bzw. gespeichert. Zudem werden die Objekte 10 mithilfe der Sensoren 4 erfasst und in die digitale Umgebungskarte eingetragen. Hieraus kann dann mit dem Fahrerassistenzsystem 2 bzw. dem Steuergerät 3 einen fahrbaren Bereich 22 bestimmt werden, in welchem das Kraftfahrzeug 1 manövriert werden kann, ohne dass eine Kollision zwischen dem Kraftfahrzeug 1 und einem der Objekte 10 droht. Dabei wird der fahrbare Bereich 22 auf Grundlage der aufgezeichneten Lerntrajektorie 18a bestimmt. Grundsätzlich kann es auch vorgesehen sein, dass in dem Lernmodus eine Mehrzahl von Lerntrajektorie 18a bis 18c aufgezeichnet werden.

In einem anschließenden Betriebsmodus wird das Kraftfahrzeug 1 mithilfe des Fahrerassistenzsystems 2 zumindest semi-autonom manövriert. In dem Lernmodus, der im Zusammenhang mit Fig. 2 erläutert wurde, wurde das Kraftfahrzeug 1 in die Garage 15 eingeparkt. In dem anschließenden Betriebsmodus wird mithilfe des Fahrerassistenzsystems 2 zumindest eine Trajektorie 23a bis 23e bestimmt, entlang welcher das Kraftfahrzeug 1 manövriert werden soll. Das Fahrerassistenzsystem 2 kann innerhalb des fahrbaren Bereichs 22 eine Mehrzahl von Trajektorien 23a bis 23e bestimmen, welche zwischen der Startposition 11 von der Zielposition 12 verlaufen. Diese Trajektorien 23a bis 23e können dem Fahrer zur Auswahl angeboten werden.

Fig. 3 zeigt eine mögliche Trajektorie 23a, welche von der Zielposition 12 zu der Startposition 11 führt. Dabei beschreibt die Trajektorie 23a die kürzeste Strecke zwischen der Zielposition 12 und der Startposition 11. Hier wird das Kraftfahrzeug 1 in Vorwärtsfahrtrichtung von der Zielposition 12 zu der Startposition 11 manövriert. Somit kann das Kraftfahrzeug 1 aus der Garage 15 ausgeparkt werden.

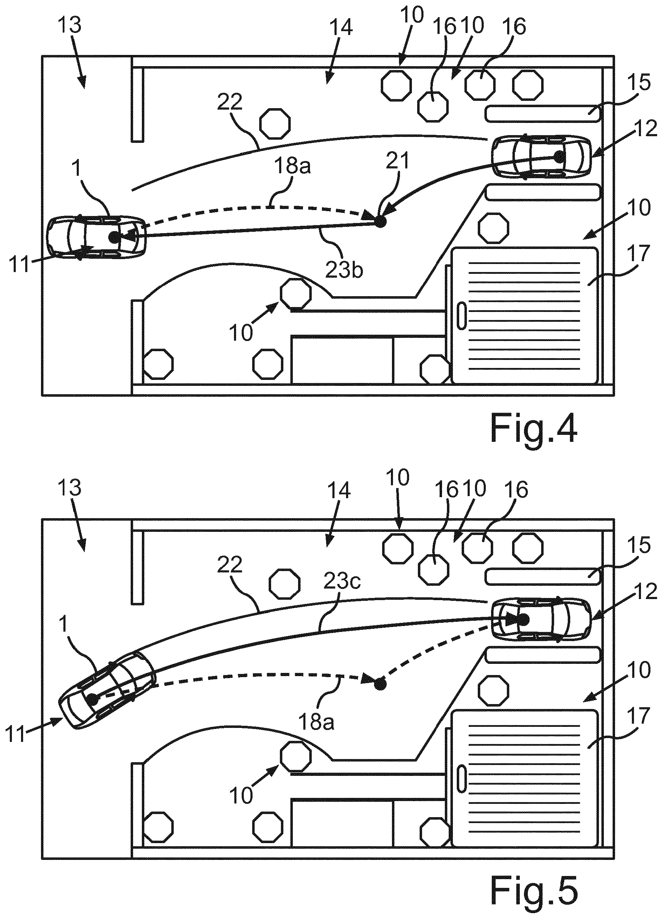

Fig. 4 zeigt eine weitere Trajektorie 23b, welche von dem Fahrerassistenzsystem 2 innerhalb des fahrbaren Bereichs 22 bestimmt wird. Diese Trajektorie 23b führt von der Zielposition 12 zu dem Wendepunkt 21 und von dort zu der Startposition 11. In diesem Fall wird das Kraftfahrzeug 1 entlang des Verlaufs der Lerntrajektorie 18a geführt, wobei das Kraftfahrzeug 1 ausschließlich in Vorwärtsfahrtrichtung bewegt wird.

Des Weiteren zeigt Fig. 5 eine weitere Trajektorie 23c, welche von dem Fahrerassistenzsystem 2 innerhalb des fahrbaren Bereichs 22 mittels des Fahrerassistenzsystems 2 bestimmt wird. Hierbei wird das Fahrerassistenzsystem 2 in dem Betriebsmodus nicht zum Ausparken des Kraftfahrzeugs 1 aus der Garage 15 verwendet, sondern zum Einparken in die Garage 15. Vorliegend wird die Trajektorie 23c derart bestimmt, dass diese von der Startposition 11 zu der Zielposition 12 führt, wobei das Kraftfahrzeug 1 in Vorwärtsfahrtrichtung bewegt wird.

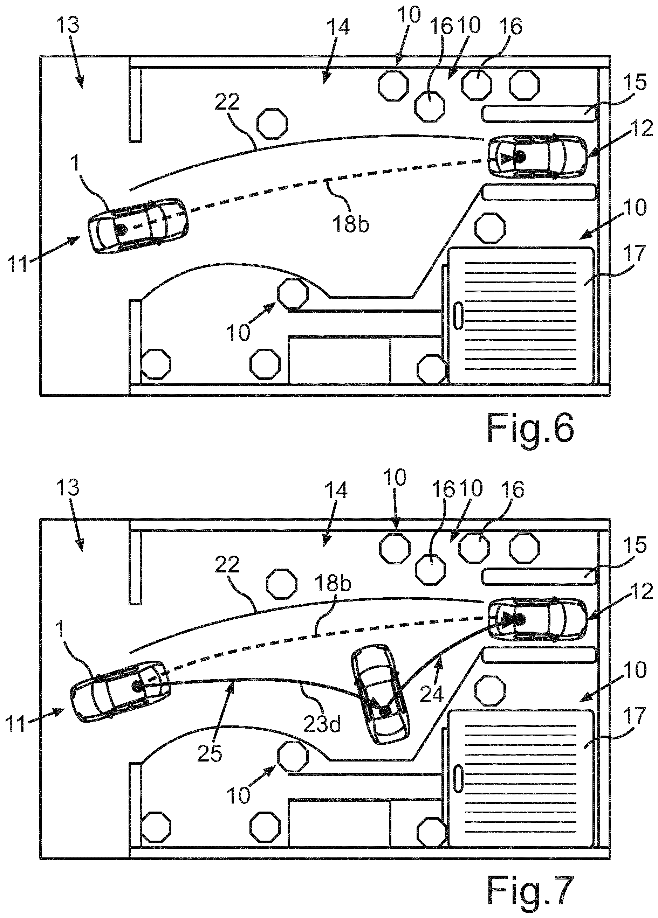

Fig. 6 zeigt ein weiteres Beispiel, bei welchem das Kraftfahrzeug 1 in dem Lernmodus entlang einer Lerntrajektorie 18b von der Startposition 11 zu der Zielposition 12 manövriert wird. Hierbei wird das Kraftfahrzeug 1 in Vorwärtsfahrtrichtung manuell von dem Fahrer bewegt. In diesem Fall war beim Einparken des Kraftfahrzeugs 1 in die Garage 15 kein Richtungswechsel vorgesehen. Auf Grundlage dieser Lerntrajektorie 18b und des hieraus ermittelten fahrbaren Bereichs 22 können mehrere Trajektorien bestimmt werden und dem Fahrer zur Auswahl angeboten werden. Erfindungsgemäß wünscht der Fahrer eine Trajektorie 23d bei welcher ein Richtungswechsel durchgeführt wird, sodass er das Kraftfahrzeug 1 in Vorwärtsfahrtrichtung auf die Fahrbahn 13 manövriert kann.

Hierzu zeigt Fig. 7 das Kraftfahrzeug 1 in dem nachfolgenden Betriebsmodus. Dabei wird das Kraftfahrzeug 1 mithilfe des Fahrerassistenzsystems 2 entlang der Trajektorie 23d manövriert. Die Trajektorie 23d weist einen ersten Abschnitt 24 auf, entlang welcher das Kraftfahrzeug 1 von der Zielposition 12 zu einem Wendepunkt 26 in Rückwärtsfahrtrichtung bewegt wird. Zudem weist die Trajektorie 23d einen zweiten Abschnitt 25 auf, entlang welcher das Kraftfahrzeug 1 in Vorwärtsfahrtrichtung von dem Wendepunkt 26 zu der Startposition 11 bewegt wird.

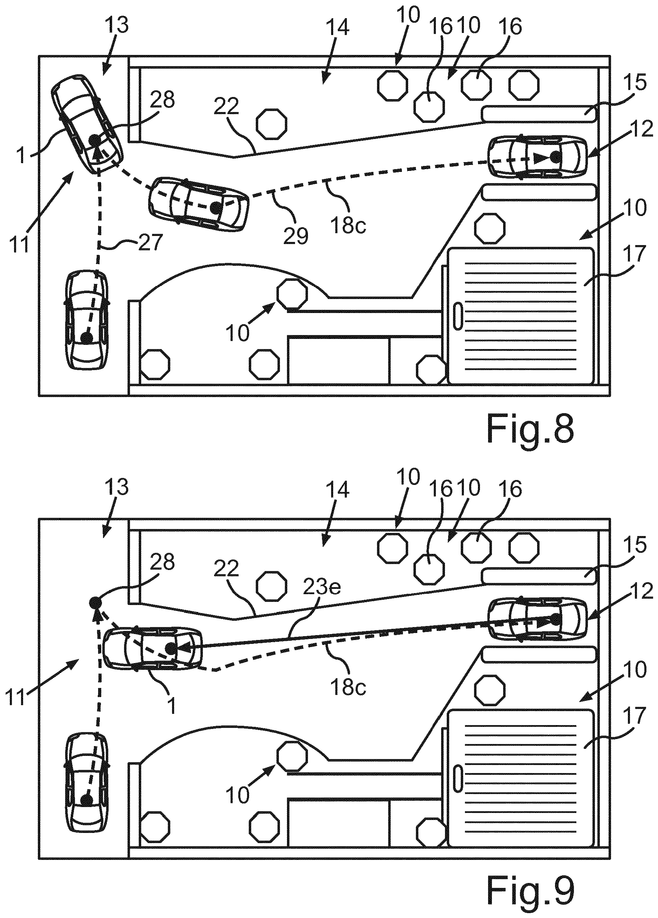

Fig. 8 zeigt eine weitere Ausführungsform einer Lerntrajektorie 18c, welche von dem Fahrer manuell in dem Lernmodus vorgegeben wird. Hierbei startet der Lernmodus auf der Fahrbahn 13 bzw. auf der öffentlichen Straße. Dabei wird das Kraftfahrzeug 1 ausgehend von der Fahrbahn 13 in die Garage 15 eingeparkt. Die Lerntrajektorie 18c umfasst einen ersten Abschnitt 27, bei welchem das Kraftfahrzeug 1 auf der Fahrbahn 13 in Vorwärtsfahrtrichtung zu einem Wendepunkt 28 manövriert wird. Von dem Wendepunkt 28 führt ein zweiter Abschnitt 29 der Lerntrajektorie 18c zu der Zielposition 12.

Hierzu zeigt Fig. 9 das Kraftfahrzeug 1 während des Betriebsmodus des Fahrerassistenzsystems 2. Hierbei wird das Kraftfahrzeug 1 entlang der Trajektorie 23e von der Zielposition 12 zu der Startposition 11 manövriert. Hierbei wird der Betriebsmodus innerhalb des Grundstücks 14 durchgeführt. Die Trajektorie 23e wird also innerhalb des fahrbaren Bereichs 22 bestimmt. Dabei wird das Kraftfahrzeug 1 in Vorwärtsfahrtrichtung entlang des kürzesten Wegs von der Garage 15 zu der Fahrbahn 13 manövriert.

## Patentansprüche

1. Verfahren zum Betreiben eines Fahrerassistenzsystems (2) für ein Kraftfahrzeug (1), bei welchem in einem Lernmodus des Fahrerassistenzsystems (2), während dem das Kraftfahrzeug (1) von einer Startposition (11) zu einer Zielposition (12) entlang zumindest einer Lerntrajektorie (18a bis 18c) von einem Fahrer des Kraftfahrzeugs (1) in Vorwärtsrichtung manuell manövriert wird, die zumindest eine Lerntrajektorie (18a bis 18c) aufgezeichnet wird und Objekte (10) in einer Umgebung (8) des Kraftfahrzeugs (1) erfasst werden, und in einem Betriebsmodus des Fahrerassistenzsystems (2) das Kraftfahrzeug (1) anhand der zumindest einen aufgezeichneten Lerntrajektorie (18a bis 18c) und der erfassten Objekte (10) zumindest semi-autonom zwischen der Startposition (11) und der Zielposition (12) manövriert wird, wobei in dem Lernmodus anhand der zumindest einen aufgezeichneten Lerntrajektorie (18a bis 18c) und der erfassten Objekte (10) ein fahrbarer Bereich (22) für das Kraftfahrzeug (1) bestimmt wird, innerhalb des fahrbaren Bereichs (22) zumindest eine Trajektorie (23a bis 23e) zwischen der Startposition (11) und der Zielposition (12) bestimmt wird und das Kraftfahrzeug (1) in dem Betriebsmodus entlang der zumindest einen bestimmten Trajektorie (23a bis 23e) manövriert wird, **dadurch gekennzeichnet, dass** auf Grundlage der zumindest einen Lerntrajektorie (18b) und des hieraus ermittelten fahrbaren Bereichs (22) mehrere Trajektorien bestimmt werden und dem Fahrer zur Auswahl angeboten werden, wobei vom Fahrer eine Trajektorie (23d) auswählbar ist, bei welcher ein Richtungswechsel durchgeführt wird, sodass er das Kraftfahrzeug (1) in Vorwärtsfahrtrichtung auf eine Fahrbahn (13) manövriert.

2. Verfahren nach Anspruch 1,
**dadurch gekennzeichnet, dass**
in zeitlich aufeinanderfolgenden Lernmodi des Fahrerassistenzsystems (2) eine Mehrzahl von Lerntrajektorien (18a bis 18c) aufgezeichnet wird und der fahrbare Bereich (22) anhand der Mehrzahl von Lerntrajektorien (18a bis 18c), Positionen der erfassten Objekte (10) und/oder Abmessungen der erfassten Objekte (10) bestimmt wird.

3. Verfahren nach einem der vorhergehenden Ansprüche,
**dadurch gekennzeichnet, dass**
die zumindest eine Trajektorie (23a bis 23e) innerhalb des fahrbaren Bereichs (22) nach einem vorbestimmten Optimierungskriterium bestimmt wird.

4. Verfahren nach Anspruch 3,
**dadurch gekennzeichnet, dass**
das Optimierungskriterium beinhaltet, dass die zumindest eine Trajektorie (23a bis 23e) den schnellsten Weg, den kürzesten Weg oder den Weg mit der geringsten Anzahl an Richtungswechseln zwischen der Startposition (11) und der Zielposition (12) beschreibt.

5. Verfahren nach einem der vorhergehenden Ansprüche,
**dadurch gekennzeichnet, dass**
die zumindest eine bestimmte Trajektorie (23a bis 23e) die von dem Fahrer im Lernmodus vorgegebene Lerntrajektorie (18a bis 18c) zwischen der Startposition (11) und der Zielposition (12) beschreibt.

6. Verfahren nach einem der vorhergehenden Ansprüche,
**dadurch gekennzeichnet, dass**
eine digitale Umgebungskarte bestimmt wird, welche den fahrbaren Bereich (22) und/oder die Objekte (10) beschreibt.

7. Verfahren nach Anspruch 6,
**dadurch gekennzeichnet, dass**
die digitale Umgebungskarte in aufeinanderfolgenden Lermodi und/oder Betriebsmodi aktualisiert wird, wobei in den aufeinanderfolgenden Lermodi und/oder Betriebsmodi zeitweise vorhandene Objekte in dem fahrbaren Bereich (22) erkannt werden.

8. Verfahren nach einem der vorhergehenden Ansprüche,
**dadurch gekennzeichnet, dass**
eine Mehrzahl von Trajektorien (23a bis 23e) in dem fahrbaren Bereich (22) bestimmt werden und dem Fahrer mittels einer Benutzerschnittstelle zur Auswahl angeboten werden.

9. Verfahren nach Anspruch 8,
**dadurch gekennzeichnet, dass**
ein Verlauf zumindest einer der Trajektorien (23a bis 23e) infolge einer Bedieneingabe des Fahrers an der Benutzerschnittstelle verändert wird.

10. Fahrerassistenzsystem (2) für ein Kraftfahrzeug (1), welches zum Durchführen eines Verfahrens nach einem der vorhergehenden Ansprüche ausgelegt ist.

11. Kraftfahrzeug (1) mit einem Fahrerassistenzsystem (2) nach Anspruch 10.

## Claims

1. Method for operating a driver assistance system (2) for a motor vehicle (1), in which, in a learning mode of the driver assistance system (2), during which the motor vehicle (1) is manually manoeuvred by a driver of the motor vehicle (1) in the forward direction from a starting position (11) to a target position (12) along at least one learning trajectory (18a to 18c), the at least one learning trajectory (18a to 18c) is recorded and objects (10) in an area (8) surrounding the motor vehicle (1) are detected, and, in an operating mode of the driver assistance system (2), the motor vehicle (1) is manoeuvred in an at least semi-autonomous manner between the starting position (11) and the target position (12) on the basis of the at least one recorded learning trajectory (18a to 18c) and the detected objects (10), wherein, in the learning mode, a driveable region (22) is determined for the motor vehicle (1) on the basis of the at least one recorded learning trajectory (18a to 18c) and the detected objects (10), at least one trajectory (23a to 23e) between the starting position (11) and the target position (12) is determined within the driveable region (22), and the motor vehicle (1) is manoeuvred along the at least one determined trajectory (23a to 23e) in the operating mode, **characterized in that** a plurality of trajectories are determined on the basis of the at least one learning trajectory (18b) and the driveable region (22) determined therefrom and are offered to the driver for selection, wherein the driver can select a trajectory (23d) for which a direction change is carried out, such that the driver manoeuvres the motor vehicle (1) onto a road (13) in the forward direction of travel.

2. Method according to Claim 1,
**characterized in that**
in temporally successive learning modes of the driver assistance system (2), a plurality of learning trajectories (18a to 18c) are recorded and the driveable region (22) is determined on the basis of the plurality of learning trajectories (18a to 18c), positions of the detected objects (10) and/or dimensions of the detected objects (10).

3. Method according to one of the preceding claims, **characterized in that**
the at least one trajectory (23a to 23e) within the driveable region (22) is determined according to a predetermined optimization criterion.

4. Method according to Claim 3,
**characterized in that**
the optimization criterion comprises the fact that the at least one trajectory (23a to 23e) describes the fastest route, the shortest route or the route with the smallest number of direction changes between the starting position (11) and the target position (12).

5. Method according to one of the preceding claims, **characterized in that**
the at least one determined trajectory (23a to 23e) describes the learning trajectory (18a to 18c) predefined by the driver in the learning mode between the starting position (11) and the target position (12) .

6. Method according to one of the preceding claims, **characterized in that**
a digital map of the surrounding area which describes the driveable region (22) and/or the objects (10) is determined.

7. Method according to Claim 6,
**characterized in that**
the digital map of the surrounding area is updated in successive learning modes and/or operating modes, wherein temporarily present objects in the driveable region (22) are detected in the successive learning modes and/or operating modes.

8. Method according to one of the preceding claims, **characterized in that**
a plurality of trajectories (23a to 23e) in the driveable region (22) are determined and are offered to the driver for selection by means of a user interface.

9. Method according to Claim 8,
**characterized in that**
a course of at least one of the trajectories (23a to 23e) is changed on account of an operating input by the driver on the user interface.

10. Driver assistance system (2) for a motor vehicle (1) which is designed to carry out a method according to one of the preceding claims.

11. Motor vehicle (1) having a driver assistance system (2) according to Claim 10.

## Revendications

1. Procédé de fonctionnement d'un système d'assistance à la conduite (2) destiné à un véhicule automobile (1), procédé dans lequel, dans un mode d'apprentissage du système d'assistance à la conduite (2) au cours duquel le véhicule automobile (1) est manœuvré manuellement par un conducteur du véhicule automobile (1) dans le sens de roulement vers l'avant d'une position de départ (11) à une position cible (12) le long d'au moins une trajectoire d'apprentissage (18a à 18c), l'au moins une trajectoire d'apprentissage (18a à 18c) est enregistrée et des objets (10) dans un environnement (8) du véhicule automobile (1) sont détectés et, dans un mode de fonctionnement du système d'assistance à la conduite (2), le véhicule automobile (1) est manœuvré de manière au moins semi-autonome entre la position de départ (11) et la position cible (12) à l'aide de l'au moins une trajectoire d'apprentissage (18a à 18c) enregistrée et des objets (10) détectés, une zone de roulement (22) du véhicule automobile (1) étant déterminée dans le mode d'apprentissage sur la base de l'au moins une trajectoire d'apprentissage (18a à 18c) enregistrée et des objets (10) détectés, au moins une trajectoire (23a à 23e) étant déterminée entre la position de départ (11) et la position cible (12) à l'intérieur de la zone de roulement (22) et le véhicule automobile (1) étant manœuvré en mode de fonctionnement le long de l'au moins une trajectoire (23a à 23e) déterminée, **caractérisé en ce que**, sur la base de l'au moins une trajectoire d'apprentissage (18b) et de la zone de roulement (22) déterminée à partir de celle-ci, une pluralité de trajectoires sont déterminées et proposées au conducteur en vue de la sélection, le conducteur pouvant sélectionner une trajectoire (23d) dans laquelle un changement de direction est effectué de sorte qu'il manœuvre le véhicule automobile (1) sur une chaussée (13) dans le sens de roulement vers l'avant.

2. Procédé selon la revendication 1, **caractérisé en ce qu'**une pluralité de trajectoires d'apprentissage (18a à 18c) est enregistrée dans des modes d'apprentissage temporellement successifs du système d'assistance à la conduite (2) et la zone de roulement (22) est déterminée sur le base de la pluralité de trajectoires d'apprentissage (18a à 18c), de positions des objets (10) détectés et/ou des dimensions des objets (10) détectés.

3. Procédé selon l'une des revendications précédentes, **caractérisé en ce que** l'au moins une trajectoire (23a à 23e) à l'intérieur de la zone de roulement (22) est déterminée selon un critère d'optimisation prédéterminé.

4. Procédé selon la revendication 3, **caractérisé en ce que** le critère d'optimisation comprend le fait que l'au moins une trajectoire (23a à 23e) décrit l'itinéraire le plus rapide, l'itinéraire le plus court ou l'itinéraire ayant le moins de changements de direction entre la position de départ (11) et la position cible (12).

5. Procédé selon l'une des revendications précédentes, **caractérisé en ce que** l'au moins une trajectoire (23a à 23e) déterminée décrit la trajectoire d'apprentissage (18a à 18c) spécifiée par le conducteur dans le mode d'apprentissage entre la position de départ (11) et la position cible (12).

6. Procédé selon l'une des revendications précédentes, **caractérisé en ce qu'**une carte d'environnement numérique est déterminée qui décrit la zone de roulement (22) et/ou les objets (10).

7. Procédé selon la revendication 6, **caractérisé en ce que** la carte d'environnement numérique est mise à jour dans des modes d'apprentissage et/ou des modes de fonctionnement successifs, des objets présents dans la zone de roulement (22) étant détectés par moments dans les modes d'apprentissage et/ou modes de fonctionnement successifs.

8. Procédé selon l'une des revendications précédentes, **caractérisé en ce qu'**une pluralité de trajectoires (23a à 23e) dans la zone de roulement (22) sont déterminées et proposées au conducteur au moyen d'une interface utilisateur en vue de la sélection.

9. Procédé selon la revendication 8, **caractérisé en ce qu'**un profil d'au moins une des trajectoires (23a à 23e) est modifié à la suite d'une entrée de commande du conducteur au niveau de l'interface utilisateur.

10. Système d'assistance à la conduite (2) destiné à un véhicule automobile (1) et conçu pour mettre en œuvre un procédé selon l'une des revendications précédentes.

11. Véhicule automobile (1) comprenant un système d'assistance à la conduite (2) selon la revendication 10.
